# EUROPEAN PATENT SPECIFICATION

(11) **EP 1 826 435 B1**
(45) Date of publication and mention of the grant of the patent: **03.12.2008**
(21) Application number: 06025609.6
(22) Date of filing: 11.12.2006
(51) Int. Cl.: F16D 27/00

(54) **Clutch actuator**
Kupplungsbetätigungsvorrichtung
Actionneur d'embrayage

(30) Priority: 18.04.2006 JP 2006114704; 24.02.2006 JP 2006048086
(43) Date of publication of application: 29.08.2007
(73) Proprietor: Yamaha Hatsudoki Kabushiki Kaisha, Iwata-shi, Shizuoka-ken 438-8501 (JP); Kabushiki Kaisha MORIC, Shizuoka-ken (JP)
(72) Inventor: Kosugi, Makoto, Iwata-shi, Shizuoka-ken 438-8501 (JP); Kazuta, Hisashi, Iwata-shi, Shizuoka-ken 438-8501 (JP); Takeuchi, Yoshihiko, Iwata-shi, Shizuoka-ken 438-8501 (JP)
(74) Representative: Grünecker, Kinkeldey, Stockmair & Schwanhäusser Anwaltssozietät

(56) References cited:
- EP-A2- 0 590 240
- EP-A2- 0 987 467
- JP-A- 2005 282 784

## Description

The present invention relates to a clutch actuator that disengages and engages a clutch, an engine unit including the clutch actuator, and a motorcycle that includes the engine unit.

Conventionally, a system is known that includes an actuator attached to an already provided manual transmission, and that automatically performs a series of start, stop and shift change operations (clutch disengagement, gear change, and clutch engagement) based on the rider's intention or the state of the vehicle.

Amongst the actuators used in the above described system, one known example of a clutch actuator for disengaging-engaging the clutch according to the preamble of claim 1 is the clutch actuator disclosed in Patent Document 1. This clutch actuator is provided with a motor, and a worm shaft that rotates coaxially with a motor shaft of the motor. A tip of the worm shaft is formed with a threaded section. In addition, the clutch actuator includes a worm wheel that meshes with the threaded section; a crank shaft that converts rotational motion of the worm wheel to linear reciprocating motion; and an output rod that is connected to the crank shaft. The clutch actuator finally converts the rotational motion of the motor to axial direction reciprocating motion of the output rod, and uses the reciprocating motion of the output rod to disengage-engage the clutch.
Patent Document 1: JP-A-2005-282784

In the clutch actuator disclosed in the above Patent Document 1, an I-cut is formed in the tip of the motor shaft of the motor. When the motor shaft and the worm shaft are fitted together, the I-cut section acts as a key, allowing transmission of driving force from the motor shaft to the worm shaft.

However, the following problem occurs if a clutch actuator using the above described motor shaft-worm shaft fitting method is applied to a saddle-type vehicle like a motorcycle. More specifically, in a saddle-type vehicle, clutch disengagement-engagement needs to be highly responsive, but with the configuration of the above patent document 1, the clutch disengagement-engagement operation does not rapidly follow the rotation of the motor.

The document EP-A-0987467 discloses a clutch actuator comprising an electric motor connected to a planetary reduction gear assembly having a splined shaft which is In engagement with a splined shaft onto which a pawl teeter arm is mounted. The pawl teeter arm is connected to a pivot arm via an adjuster plate wherein the pivot arm is provided for actuating a clutch via a linkage and a cam assembly.

The invention takes into consideration the above described problems, and it is an object thereof to provide a clutch actuator, an engine unit including the clutch actuator, and a saddle-type vehicle including the engine unit that can improve the responsiveness of the clutch operation.

This objective is solved by a clutch actuator for a clutch of a straddle-type vehicle according to claim 1.

Preferably, the motor shaft and the worm shaft are supported by three bearings provided in a row in their axial direction. Therein, each of the bearings maybe a ball bearing.

Further, preferably, amongst the three bearings, two of the bearings are positioned at one end side and the other of the bearings is positioned on the other end side of the threaded section of the worm shaft.

Preferably, a tip of the motor shaft is chamfered.

Further, preferably the chamfering is performed on an area of the motor shaft that spreads further to a shaft center side than the bottom of the spline teeth formed in the motor shaft.

Still further, preferably the clutch actuator is adapted for use in a saddle type vehicle.

Further, preferably there is provided an engine unit comprising: an engine; a clutch that disengages and engages transmission of driving force of the engine; and the clutch actuator according to one of the above embodiments, and a saddle-type vehicle having such an engine unit.

In the following, the present invention is explained in greater detail with respect to several embodiments thereof in conjunction with the accompanying drawings, wherein:
- Fig. 1: is a side view of a motorcycle according to an embodiment,
- Fig. 2: shows the state in which various structural members of an automatic transmission control device are attached,
- Fig. 3: shows the state in which various structural members of the automatic transmission control device are attached,
- Fig. 4: shows the state in which various structural members of the automatic transmission control device are attached,
- Fig. 5: shows the state in which various structural members of the automatic transmission control device are attached,
- Fig. 6: shows the shows the state in which various structural members of the automatic transmission control device are attached,

- Fig. 7: is a cross sectional view of the internal structure of an engine,
- Fig. 8: is an outline view of a shift actuator, a shift rod, and a shift mechanism,
- Fig. 9: is a side view of the sift actuator, the shift rod, and the shift mechanism,
- Fig. 10: is an outline view of a clutch actuator,
- Fig. 11: is a side view of the clutch actuator,
- Fig. 12: is a cross sectional view along line A-A of Fig. 11,
- Fig. 13: is a cross sectional view along line B-B of Fig. 11,
- Fig. 14: is an enlarged cross sectional view of a fitting portion of a motor shaft and a worm shaft,
- Fig. 15: is an enlarged view of a section of the worm shaft in which a threaded section is formed,
- Fig. 16: is a perspective view of a switch section of a handle grip, and
- Fig. 17: illustrates the system of the automatic transmission control device.

### Description of the Reference Numerals and Signs:

- 1: Motorcycle (saddle-type vehicle)
- 20: Engine
- 60: Clutch actuator (clutch actuator)
- 60a: Clutch motor (motor)
- 60b: Motor shaft
- 60e: Spline teeth
- 60f: Rounded section
- 103: Worm shaft
- 103a: Spline hole
- 103b: Rounded section
- 103c: Threaded section
- 103d: Threads
- 105: Worm wheel
- 105a: Gear teeth
- 106: Motor bearing
- 108: Bearing
- 110: Crank shaft
- 111: Crank shaft member
- 112: Crank pin
- 113: Crank arms

As described above, in the conventional art, the I-cut is formed in the tip of the motor shaft, and this I-cut section transmits the driving force from the motor shaft to the worm shaft. When a motor shaft formed with an I-cut like this is used, if the shaft center of the motor shaft oscillates during rotation of the motor, it is not possible for this oscillation to be absorbed at the worm shaft side. Accordingly, a reasonably large space must be pre-provided between the I-cut section of the motor shaft and the fitting hole of the worm shaft.

However, if a space is formed in this manner, the motor shaft rotates idly for a very slight period of time between when the motor shaft rotates and when this rotation is transmitted to the worm shaft side. Thus, responsiveness is worse when the clutch is disengaged and engaged. To address this, a structure could be adopted in which the above space is made smaller in order to improve the responsiveness of the clutch disengagement-engagement operation. However, if the above space is simply made smaller, although the responsiveness of the clutch disengagement-engagement operation would be improved, oscillation of the shaft center of the motor shaft could not be absorbed at the worm shaft side, and thus the shaft center of the worm shaft would oscillate.

Thus, according to the present teaching, in order to solve the above problems, the motor shaft and the worm shaft are spline fitted together. With this fitting structure for the motor shaft and the worm shaft, a plurality of meshing sections are formed in the rotation direction. Accordingly, as compared to the above I-cut, when the same driving force is transmitted, the fitting length in the axial direction can be made shorter. Note that, when the fitting length in the axial direction is shorter, as compared to when the fitting length is longer, it is possible to permit greater misalignment of the motor shaft and the worm shaft. More specifically, when the fitting length in the axial direction is short (note that, "short" is only used here to indicate a comparison with when the fitting length is long, and does not indicate any specific reference to the length of the fitting section), oscillation of the shaft center of the motor shaft can be favorably absorbed at the worm shaft side. Accordingly, the space for absorbing oscillation of the shaft center, namely, the rotation direction space (the space between the spline teeth and a spline groove) between the motor shaft and the worm shaft can be made smaller. As a result, the rotation of the worm shaft rapidly follows the rotation of the motor shaft, thereby improving the responsiveness of the clutch disengagement-engagement operation.

Fitting the motor shaft and the worm shaft together by splining in this manner allows a certain degree of misalignment to be permitted between the motor shaft and the worm shaft. As a result, the space in the rotation direction of both shafts can be made smaller, and responsiveness of the clutch disengagement-engagement operation improved. The inventors have devised the clutch actuator according to the teaching, namely, a clutch actuator that can favorably absorb oscillation of the shaft center of the motor shaft at the worm shaft side, and that can favorably maintain responsiveness of the clutch disengagement-engagement operation, based on the above insights.

Note that, in the present teaching, the motor shaft and the worm shaft are engaged by being spline fitted together. However, according to the present teaching, although it is necessary that the number of spline teeth formed in the motor shaft or the worm shaft is three or more, there is no specific limitation on the number of teeth. For example, spline fitting according to the present teaching also includes a case when fine spline teeth are formed around the shaft, namely, when serrations are used for fitting. Spline fitting according to the present teaching also includes a configuration in which: a plurality of protrusions and depressions are formed around, at the least, a circumferential direction section of the external periphery of one of the shafts: a plurality of protrusions and depressions are formed around, at the least, a circumferential direction section of the internal periphery of the other of the shafts; and the shafts are fitted together such that the protrusions and depressions of both the shafts are engaged.

Hereinafter, an embodiment will be explained in detail with reference to the drawings.

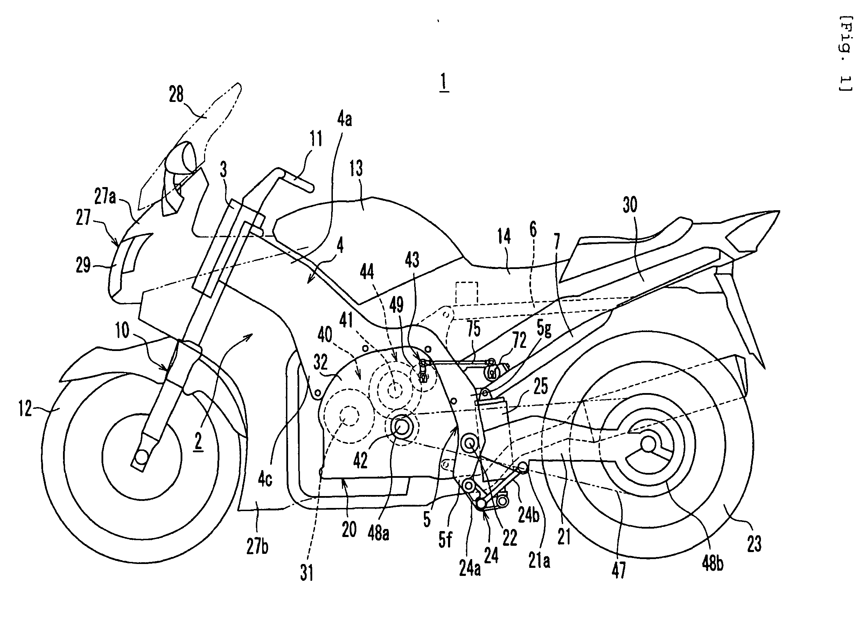

Fig. 1 is a side view of a motorcycle 1 according to the present embodiment. As can be seen from Fig. 1, the motorcycle 1 according to the embodiment is provided with a head tube 3 and a body frame 2. The body frame 2 includes, at the least, a main frame 4 that extends rearward from the head tube 3, and a rear arm bracket 5 that extends downwards from a rear section of the main from 4. The main frame 4 has two frame sections 4a that extend in the left-right rearward direction from the head tube 3 (only one of these is shown in Fig. 1). A rear section of the frame section 4a is connected to the downwardly-extending rear arm bracket 5.

A front fork 10 is pivotably supported by the head tube 3. A steering handlebar 11 is provided at an upper end of the front fork 10, and a front wheel 12 is provided at a lower end of the front fork 10. A fuel tank 13 is provided in an upper section of the main frame 4, and a seat 14 is provided to the rear of the fuel tank 13. The seat 14 is mounted on a seat rail 6.

An engine 20 is suspended by the main frame 4 and the rear arm bracket 5. The engine 20 is supported by an engine attachment section 4c and the frame section 4a of the main frame 4, and is also supported by an engine attachment section (not shown) of the rear arm bracket 5. Note that, the engine 20 is not limited to being an internal combustion engine like a gasoline engine, and may be a motor engine, or the like. Further, the engine may combine a gasoline engine and a motor engine.

A front end of a rear arm 21 is supported via a pivot shaft 22 in the rear arm bracket 5 so as to be capable of rocking upward and downward. A rear wheel 23 is supported by a rear end of the rear arm 21. The rear arm 21 is supported by the body frame 2 via a link mechanism 24 and a rear cushion unit 25. The link mechanism 24 has a body side link 24a and a rear arm side link 24b. One end of the body side link 24a is rotatably coupled to a link attachment section 5f of the rear arm bracket 5. One end of the rear arm side link 24b is rotatably coupled to a link attachment section 21a of the rear frame 21. In addition, a central section of the body side link 24a and the other end of the rear arm side link 24b are rotatably coupled. A lower section of the rear cushion unit 25 is supported by the other end of the body side link 24a, and an upper section of the rear cushion unit 25 is supported by a cushion attachment section 5g. The rear cushion unit 25 is disposed to the rear of the rear arm bracket 5.

Further, a cowling 27 is provided on the body frame 2. The cowling 27 includes an upper cowling 27a that covers an area forward of the steering handlebar 11, and a lower cowling 27b that covers forward and to the left and right sides of the main frame 4 and to the left and right sides below the engine 20. Note that, the upper cowling 27a is supported by the main frame 2 via a stay, now shown. The upper cowling 27a forms a front surface and both side surfaces in the left and right directions of a body front section. Further, a screen 28 and a head lamp 29, which are made from transparent material, etc. are attached to the upper cowling 27a and positioned at an upper section of the body front. A side cover 30 is disposed on a back stay 7 so as to cover in the left-right side direction of the seat 14 and to cover above the rear wheel 23.

Although the type of engine used in the present embodiment is not limited, in this embodiment, the engine 20 is a liquid cooled, parallel 4-cycle, 4-cylinder engine. The engine 20 is disposed such that the cylinder axis (not shown) lies in the body forward direction and is slightly inclined from the horizontal. A crank case 32 that houses a crank shaft 31 is suspended from and supported by the body frame 2 at both sides in the vehicle width direction.

Further, the engine 20 is provided with a transmission 40. The transmission 40 includes a main shaft 41 positioned parallel to the crank shaft 31; a drive shaft 42 that is positioned parallel to the main shaft 41; and a shift mechanism 43 that includes multi-speed gears 49. The transmission 40 is integrally assembled with the crank case 32. The clutch mechanism 44 disengages and engages transmission of rotation when the gears 49 are switched.

The drive shaft 42 is provided with a drive sprocket 48a, and a chain 47 is wound around this drive sprocket 48a and a driven sprocket 48b provided on the rear wheel 23. Accordingly, engine power is transmitted to the rear wheel 23 via the chain 47.

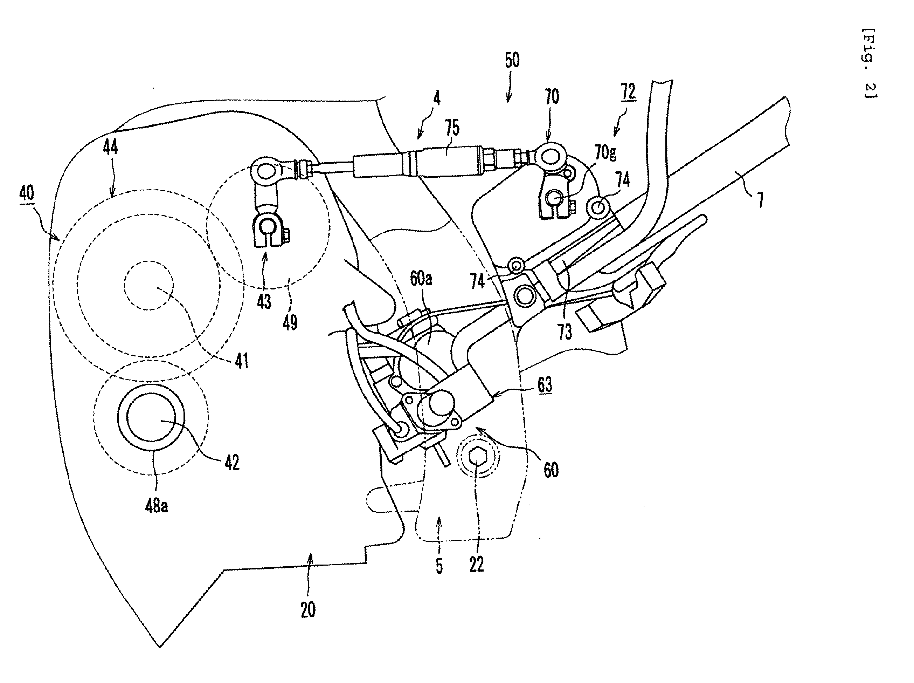

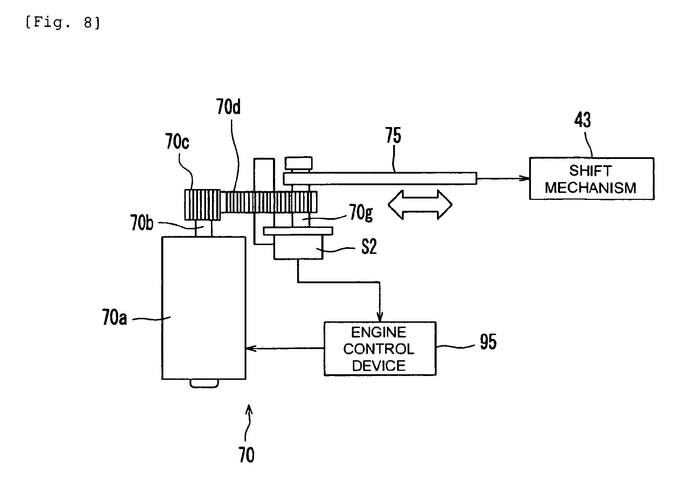

Next, an automatic transmission control device 50 provided in the motorcycle 1 will be described. Fig. 2 to Fig. 6 show the state in which the various structural members of the automatic transmission control device 50 are attached. As is apparent from Fig. 2, the automatic transmission control device 50 automatically disengages and engages the clutch mechanism 44 and switches the gears of the transmission 40. The automatic transmission control device 50 includes a clutch actuator 60 that drives the clutch mechanism 44; a shift actuator 70 that switches the gears of the transmission 40; and an engine control device 95 (not shown in Fig. 2; refer to Fig. 8) that controls drive of the clutch actuator 60 and the shift actuator 70.

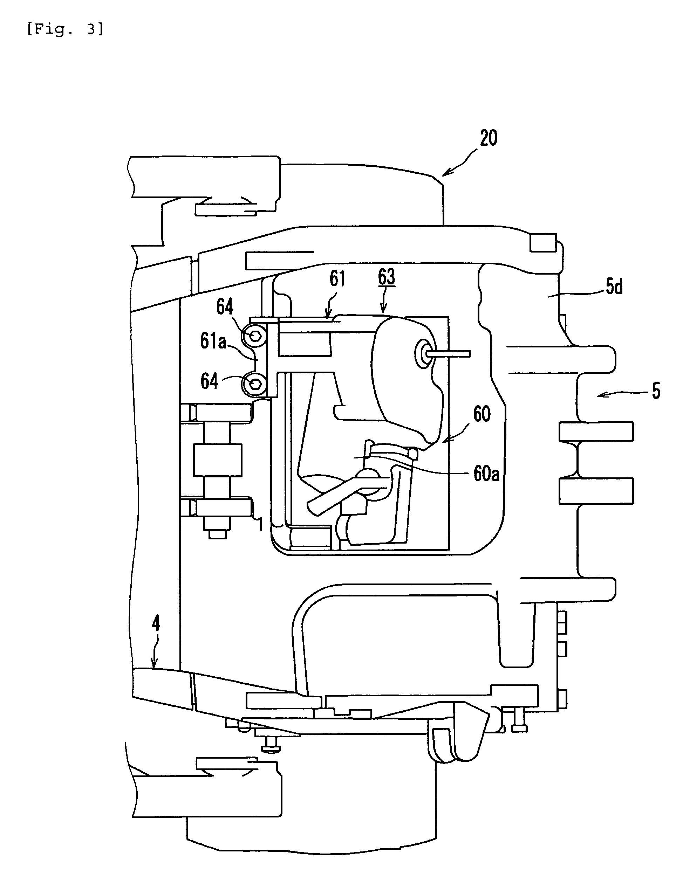

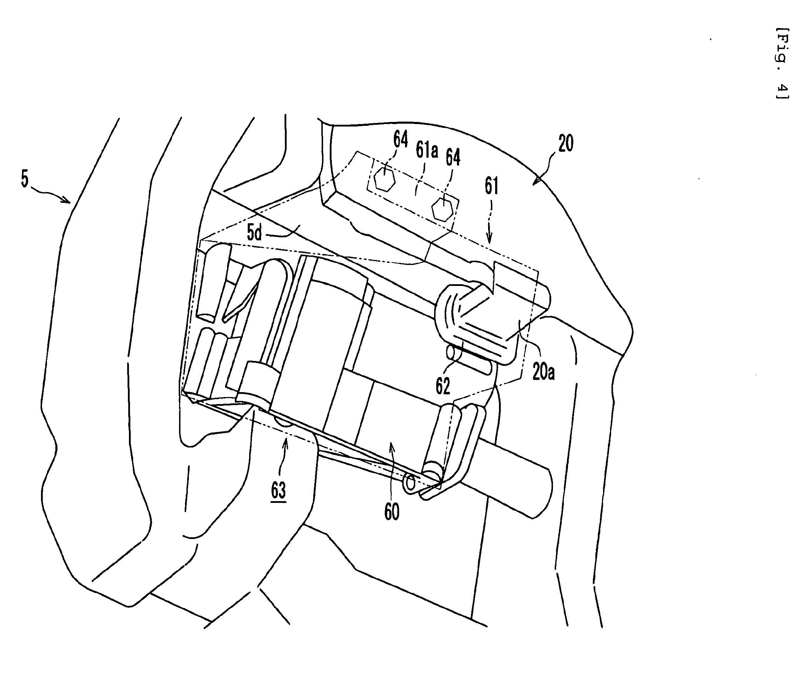

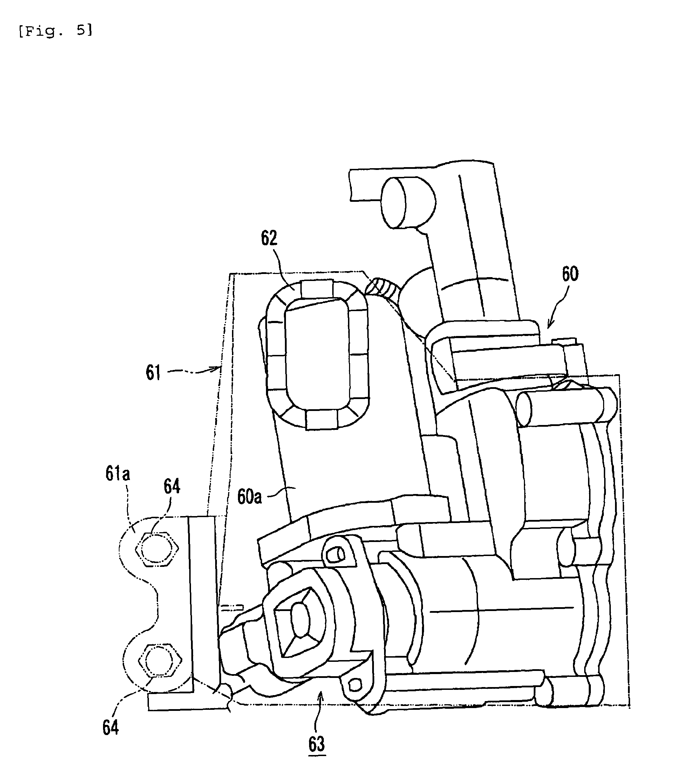

Referring to Fig. 3, the clutch actuator 60 is formed from a clutch control unit 63 that is integrally assembled with an attachment plate 61 on which various structural members are mounted. An engagement hole 62 (refer to Fig. 4 and Fig. 5) is fixed to the attachment plate 61. As shown in Fig. 4, the clutch control unit 63 is attached such that the engagement hole 62 is engaged with a protrusion 20a that is fixed to a rear section of the engine 20, and an attachment section 61a of the attachment plate 61 is fastened and fixed to a member 5d of the rear arm bracket 5 using fasteners 64, which are bolts or the like. In this manner, the clutch control unit 63 is arranged and positioned to the rear of the engine 20 and is surrounded by the rear arm bracket 5 when viewed from the side (refer to Fig. 1).

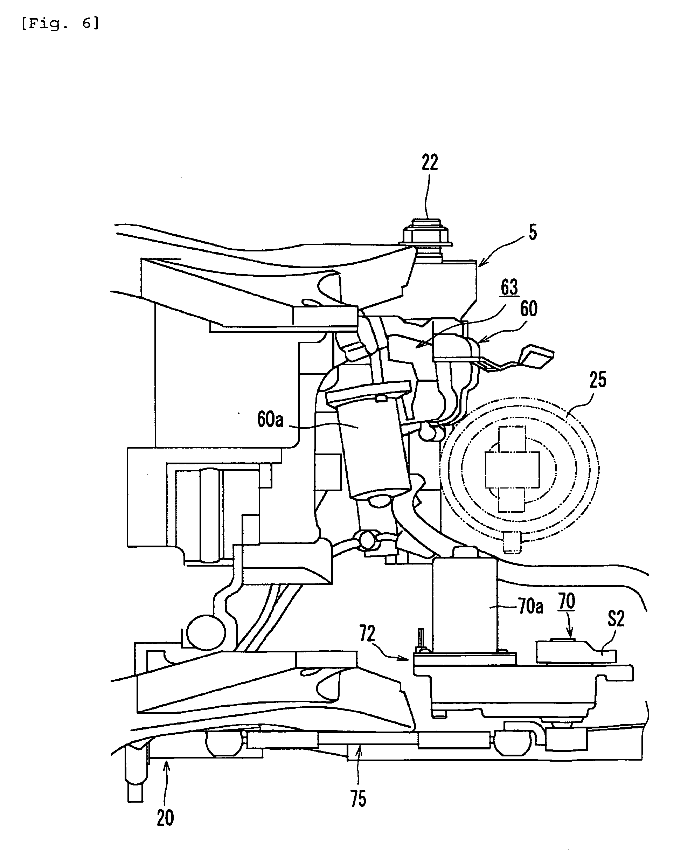

Referring to Fig. 2 and Fig. 6, the shift actuator 70 is integrated with a shift position detection sensor S2 (refer to Fig. 6), and these members configure a shift control unit 72. As can be seen from Fig. 2, an attachment bracket 73 is fixed to the back stay 7. The shift control unit 72 is attached by fastening and fixing the shift actuator 70 to the attachment bracket 73 using fasteners 74, which are bolts or the like. In this manner, the shift control unit 72 is arranged and positioned such that, when viewed from the side, the shift control unit 72 is opposite from the transmission 40 with the main frame 4 interposed therebetween, and the shift actuator 70 is positioned to the rear of the main frame 4.

The shift mechanism 43 and the shift actuator 70 are coupled together by a shift power transmission member. In this embodiment, the shift power transmission member is configured from a shift rod 75. The shift rod 75, when viewed from the side, passes across the body frame 2.

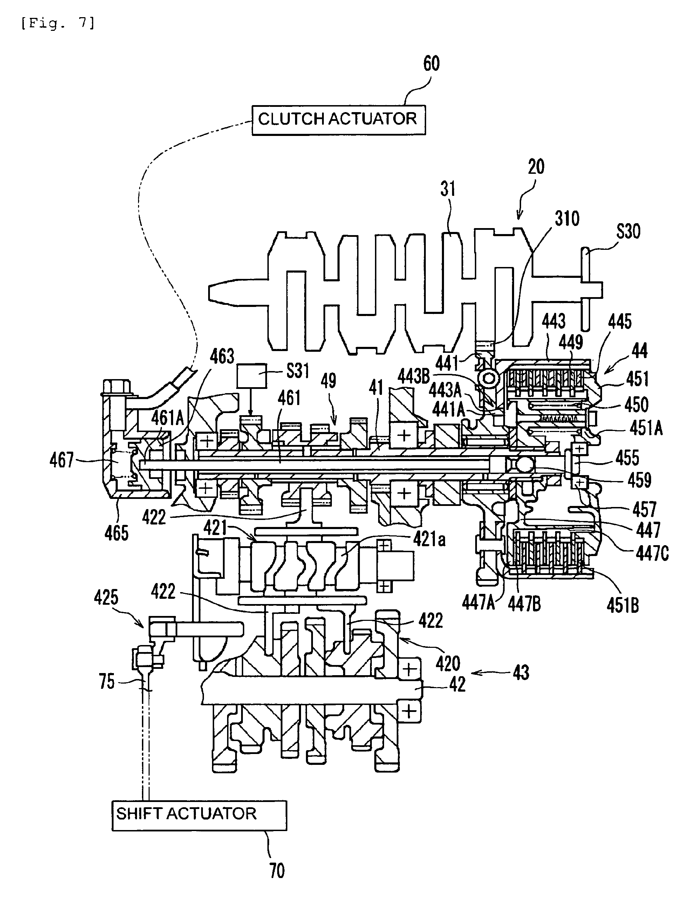

Next, the clutch mechanism 44 will be explained in detail. Fig. 7 shows a cross sectional view of the internal structure of the engine 20.

The clutch mechanism 44 according to the embodiment is, for example, a multi-plate friction clutch, and includes a clutch housing 443; a plurality of friction plates 445 provided integrally with the clutch housing 443; a clutch boss 447; and a plurality of clutch plates 449 provided integrally with the clutch boss 447. A gear 310 is integrally supported by the crank shaft 31 of the engine 20, and the main shaft 41 supports a gear 441 that meshes with the gear 310 such that the gear 441 can rotate with respect to the main shaft 41. The clutch housing 443 is integrally provided with the gear 441, and torque from the crank shaft 31 is transmitted to the clutch housing 443 through the gear 441. Torque from the clutch housing 443 is transmitted to the clutch boss 447 by frictional force generated between the plurality of friction plates 445 and the plurality of clutch plates 449.

The gear 441 is rotatably supported by the main shaft 41 at one end section (the right side in Fig. 7) of the main shaft 41. The clutch housing 443 is provided integrally with a boss section of the gear 441, thus allowing rotation with respect to the main shaft 41 while controlling movement in the axial direction of the main shaft 41. Further, the clutch boss 447 is integrally provided with the main shaft 41 at the one end section of the main shaft 41 (further to the end of the one end section than the gear 441).

The clutch boss 447 is provided to the inside of the tubular clutch housing 443. The gear 441, the clutch housing 443, the clutch boss 447, and the main shaft 41 are provided coaxially with their centers of rotation aligned.

The boss section of the gear 441 is provided with a cylindrical engagement protrusion 441A. An engagement member 443B, formed with an engagement hole 443A that engages with the engagement protrusion 441A, is provided at one end section (on the left side of Fig. 7) of the tubular clutch housing 443. The engagement protrusion 441A is fitted into the engagement hole 443A to fix the clutch housing 443 to the gear 441.

Each friction plate 445 is a thin ring shaped plate. The external periphery edge of each friction plate 445 is supported at the inner periphery side of the tubular section of the clutch housing 443 such that the plate surface of each friction plate 445 is substantially perpendicular with respect to the axial direction of the main shaft 41. As a result of this support, each friction plate 445 is capable of very slight relative movement in the axial direction of the main shaft 41 with respect to the clutch housing 443. Further, each friction plate 445 is controlled such that it is not capable of relative rotation in the rotational direction of the main shaft 41 with respect to the clutch housing 443.

Note that, there is a predetermined space (with a length that is very slightly larger than the thickness of the clutch plate 449) between each of the above described plate surfaces of the friction plates 445.

The clutch boss 447 is tubular, and a circular flange 447A, which has an external diameter that is substantially the same as the external diameter of the clutch plate 449, is provided at one end section of the clutch boss 447 (the left side in Fig. 7). The plurality of clutch plates 449 are supported at the external periphery of the tubular section of the clutch boss 447. As a result of this support, each clutch plate 449 is capable of very slight relative movement in the axial direction of the main shaft 41 with respect to the clutch boss 447. Further, each clutch plate 449 is controlled such that it is not capable of relative rotation in the rotational direction of the main shaft 41 with respect to the clutch boss 447.

Moreover, the clutch boss 447 is fixed to the one end section of the main shaft 41 (the right side in Fig. 7) such that the flange 447A is positioned at the engagement member 443B of the clutch housing 443.

Each clutch plate 449 is a thin ring shaped plate. The internal periphery edge of each clutch plate 449 is supported at the external periphery side of the tubular section of the clutch boss 447 such that the plate surface of each clutch plate 449 is substantially perpendicular with respect to the axial direction of the main shaft 41.

Further, there is a predetermined space (with a length that is very slightly larger than the thickness of the friction plate 445) between each of the above described plate surfaces of the clutch plates 449.

The external diameter of each clutch plate 449 is slightly smaller than the internal diameter of the tubular section of the clutch housing 443. The internal diameter of each friction plate 445 is slightly larger than the external diameter of the tubular section of the clutch boss 447. In addition, the friction plates 445 and the clutch plates 449 are alternately arranged in the axial direction of the main shaft 41, and a very slight space is formed between each of the friction plates 445 and the clutch plates 449 in the axial direction of the main shaft 441.

A pressing member 447B, structured by the flange 447A of the clutch boss 447, is provided at the engagement member 443B side (the left side in Fig. 7) of the clutch housing 443 at the external side in the axial direction of the main shaft 1 of the alternately arranged friction plates 445 and the clutch plates 449. The pressing member 447B and a pressure plate 451 squeezes the interposed friction plates 445 and the clutch plates 449 in the axial direction of the main shaft 41, thus generating frictional force between each friction plate 445 and each clutch plate 449.

A plurality of cylindrical guide members 447C, which extend in the axial direction of the main shaft 41 and which are provided integrally with the clutch boss 447, are provided at the internal side of the tubular clutch boss 447. The pressure plate 451 is provided with a plurality of guides 451A that respectively engage with the guides 447C. As a result of the guides 447C and the guides 451A, the pressure plate 451 is capable of relative movement in the axial direction of the main shaft 41 with respect to the clutch boss 447, and also rotates synchronously with the clutch boss 447. Note that, the pressure plate 451 is driven by the clutch actuator 60. The clutch actuator 60 will be described in detail later with reference to the drawings.

Further, the pressure plate 451 has a tabular pressing member 451B. This pressing member 451B is substantially parallel to the plate surface of each friction plate 445 and each clutch plate 449.

The clutch mechanism 44 is provided with a plurality of springs 450 that are disposed so as to respectively surround each of the plurality of tubular guides 447C. Each spring 450 urges the pressure plate 451 toward the left side of Fig. 7. In other words, each spring 450 urges the pressure plate 451 in the direction in which the pressing member 451B of the pressure plate 451 is moved close to the pressing member 447B of the clutch boss 447.

The pressure plate 451 is engaged at a central section of the pressure plate 451 with one end (the right side of Fig. 7) of a push rod 455 via a bearing like a deep groove ball bearing 457 such that the pressure plate 451 is capable of rotating with respect to the push rod 455. The other end of the push rod 455 (the left side of Fig. 7) is engaged with the internal side of one end section of the tubular main shaft 41. A spherical ball 459 that abuts with the other end of the push rod 455 (the left end) is provided at the internal side of the tubular main shaft 41. Further, a push rod 461 that abuts with the ball 459 is provided at the right side of the ball 459.

An end section (left end section) 461A of the push rod 461 protrudes outwards from the other end of the tubular main shaft 41. A piston 463 is integrally provided with this end section 461A. The piston 463 is guided by a cylinder body 465, and can slide in the axial direction of the main shaft 41.

When hydraulic oil, which acts as a compressed fluid, is supplied to a space 467 enclosed by the piston 463 and the cylinder body 465, the piston 463 is pushed and moved in the rightward direction of the Fig. 7. Accordingly, the piston 463 pushes the pressure plate 451 in the rightward direction of Fig. 7 via the push rod 461, the ball 459, the push rod 455, and the deep groove ball bearing 457. In this way, the pressure plate 451 is pushed in the rightward direction of Fig. 7, and the pressing member 451B of the pressure plate 451 separates away from the friction plates 445, thereby disengaging the clutch.

When the clutch mechanism 44 is connected, the pressure plate 451 is urged and moves in the direction of the flange 447A of the clutch boss 447 (the leftward direction of Fig. 7) by the springs 450. In this state, the pressing member 447B of the clutch boss 447 and the pressing member 451B of the pressure plate 451 cause frictional force to be generated between each friction plate 445 and each clutch plate 449. Accordingly, driving force can be transmitted from the clutch housing 443 to the clutch boss 447.

On the other hand, when the clutch mechanism 44 is disengaged, the push rod 455 moves the pressure plate 451 in the rightward direction of Fig. 7. Further, the pressing member 451B of the pressure plate 451 is separated away from the friction plate 445 positioned closest to the pressing member 451B (the friction plate 445 on the far right side of Fig. 7).

In this state, each friction plate 445 and each clutch plate 449 are not sandwiched, and thus a very slight space is formed between each friction plate 445 and each clutch plate 449. Accordingly, frictional force, which enables the transmission of driving force, is not generated between each friction plate 445 and each clutch plate 449.

In this manner, depending on the magnitude of the driving force of the clutch actuator 60 and the urging force of the springs 450, the pressure plate 451 is moved in one or the other of the axial directions of the main shaft 41. The clutch is connected or disengaged in accordance with this movement.

Next, the structure of the shift mechanism 43 will be explained in detail with reference to Fig. 7.

An engine rotation speed sensor S30 is mounted to the end of the crank shaft 31 of the engine 20. The crank shaft 31 is coupled to the main shaft 41 via the multi-plate clutch mechanism 44. The multi-speed gears 49 are mounted to the main shaft 41, and a main shaft rotation speed sensor S31 is also provided on the main shaft 41. Each gear 49 on the main shaft 41 meshes with a respective gear 420 mounted on the drive shaft 42 (the figure shows that they are separated) that corresponds with each gear 49. The gears 49 and the gears 420 are attached such that, apart from the selected pair of gears, either one or both of the gears 49 and gears 420 can rotate freely (in an idle state) with respect to either the main shaft 41 or the drive shaft 42. Accordingly, transmission of rotation from the main shaft 41 to the drive shaft 42 only occurs via the selected pair of gears.

The operation of selecting and changing the gear ratio of the gears 49 and the gears 420 is performed by a shift cam 421 that is a shift input shaft. The shift cam 421 has a plurality of cam grooves 421a. A shift fork 422 is mounted in each cam groove 421a. Each shift fork 422 engages with a predetermined gear 49 and gear 420 on the respective main shaft 41 and drive shaft 42. Rotation of the shift cam 421 causes the shift fork 422 to move in each axial direction while being guided by the cam groove 421a, whereby only the pair of the gear 49 and the gear 420 at the position corresponding to the rotation angle of the shift cam 421 are spline fixed to the respective main shaft 41 and the drive shaft 42. Accordingly, the gear position is determined, and rotation is transmitted at a predetermined gear ratio between the main shaft 41 and the drive shaft 42 via the given gear 49 and the gear 420.

The shift mechanism 43 uses drive of the shift actuator 70 to reciprocally move the shift rod 75, whereby the shift cam 421 is rotated by just a predetermined angle via a shift link mechanism 425. Accordingly, the shift fork 422 moves just a predetermined amount in the axial direction along the cam groove 421a. The pairs of gears 49 and gears 420 are thus fixed in order to the main shaft 41 and the drive shaft 42, whereby rotational driving force is transmitted at each reduction gear ratio.

Next, the structure of the shift actuator 70 will be explained in even more detail. Note that, the shift actuator 70 may be hydraulic or electric.

Fig. 8 is an outline view of the shift actuator 70, the shift rod 75, and the shift mechanism 43. Referring to Fig. 8, in the shift actuator 70 according to the embodiment, a shift motor 70a rotates when a signal is output from the engine control device 95. The rotation of the shift motor 70a causes a gear 70c of a motor shaft 70b to rotate. The rotation of the gear 70c causes a coupled reduction gear 70d to rotate, whereby a drive shaft 70g rotates.

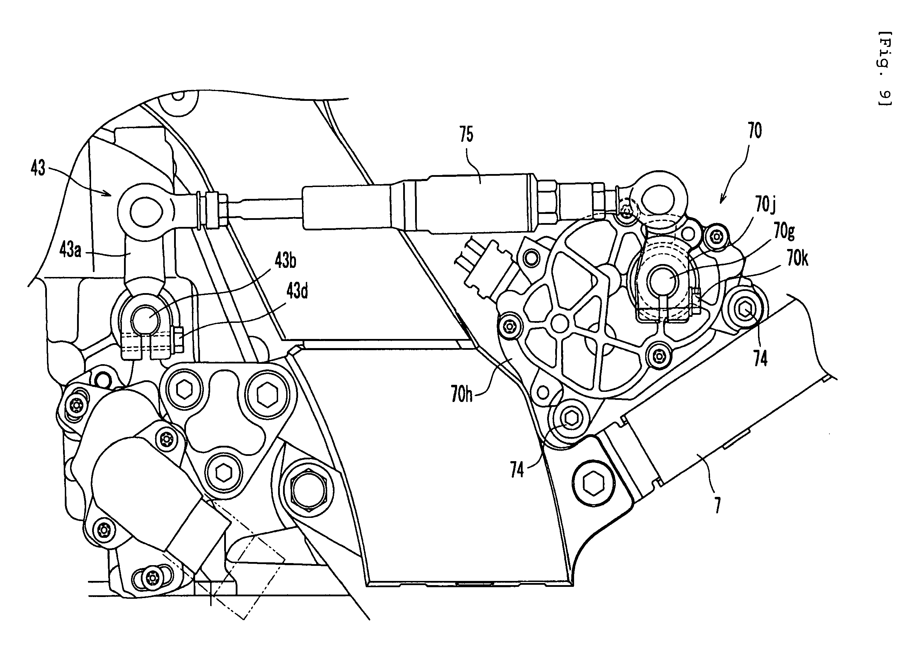

Fig. 9 shows a side view of the shift actuator 70, the shift rod 75, and the shift mechanism 43. Referring to Fig. 9, a housing 70h of the shift actuator 70 is fixed to the attachment bracket 73 fixed to the back stay 7 (refer to Fig. 2) using a fastener 74 (refer to Fig. 2).

An operation lever 70j is provided on the drive shaft 70g (refer to Fig. 8). A connecting section of the shift rod 75 on the shift actuator 70 side is connected using a bolt (not shown) to the operation level 70j. The connecting section of the shift rod 75 on the shift actuator 70 side is capable of rotating with respect to the operation lever 70j. Further, the operation lever 70j is fastened and fixed to the drive shaft 70g by a bolt 70k, whereby the operation lever 70j is prevented from moving in the axial direction of the drive shaft 70g.

The shift position detection sensor S2 is disposed on the drive shaft 70g (refer to Fig. 8). This shift position detection sensor S2 is disposed at an end (the end toward the inward direction of the paper of Fig. 9) of the drive shaft 70g, and is fastened and fixed to the housing 70h by an attachment bolt (not shown). The shift position detection sensor S2 detects position information based on the rotation of the drive shaft 70g, and transmits this position information to the engine control device 95. The engine control device 95 controls the shift motor 70a based on the position information.

Moreover, a connecting section of the shift rod 75 at the shift mechanism 43 side is connected to a shift operation lever 43a of the shift mechanism 43 by a bolt (not shown). The connecting section of the shift rod 75 at the shift mechanism 43 side is capable of rotating with respect to the shift operation lever 43a. Further, the shift operation lever 43a is fastened and fixed to a shift operation shaft 43b by a bolt 43d, whereby the shift operation lever 43a is prevented from moving in the axial direction of the shift operation shaft 43b.

When the shift rod 75 moves, the shift operation lever 43a moves along therewith. The movement of the shift operation lever 43a is a rotational motion centering on the shift operation shaft 43b that is spline engaged with the shift operation lever 43a. Thus, the shift operation shaft 43b rotates along with the movement of the shift operation lever 43a.

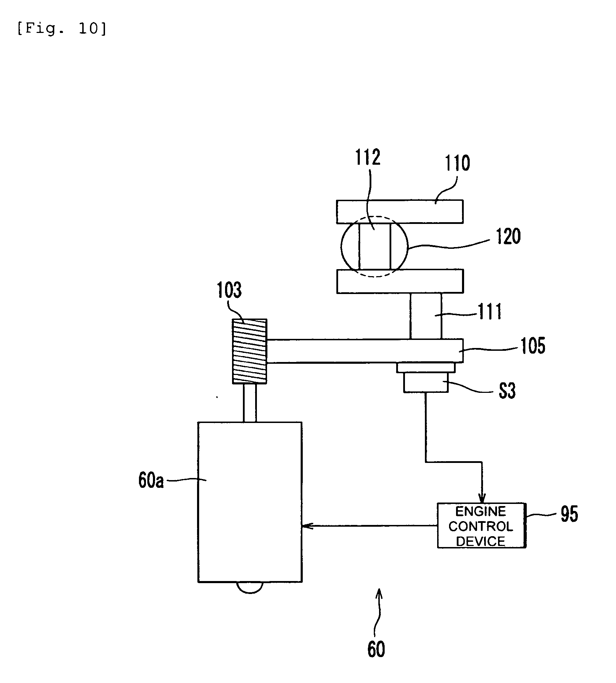

Next, the structure of the clutch actuator 60 will be explained in even more detail. Fig. 10 shows an outline view of the clutch actuator 60. Referring to Fig. 10, in the clutch actuator 60 according to the embodiment, a clutch motor 60a rotates when a signal is output by the engine control unit 95, and this rotation is accompanied by rotation of a worm shaft 103. Rotation of the worm shaft 103 is transmitted to a worm wheel 105 that is meshed with the worm shaft 103. The worm wheel 105 is fixed to a crank shaft 110 such that the worm wheel 105 is coaxial with a crank shaft member 111 of the crank shaft 110. In addition, an output rod 120 is fixed to a crank pin 112 of the crank shaft 110. Accordingly, rotational motion of the crank shaft 110 is converted to reciprocating motion of the output rod 120 (in terms of the paper of Fig. 10, motion from the inward direction to the outward direction). Moreover, a clutch position detection sensor S3 is provided at an end of the crank shaft member 111 of the crank shaft 110. The clutch position detection sensor S3 detects the rotation angle of the crank shaft member 111, which is then used as basis for detecting the clutch position of the clutch mechanism 44.

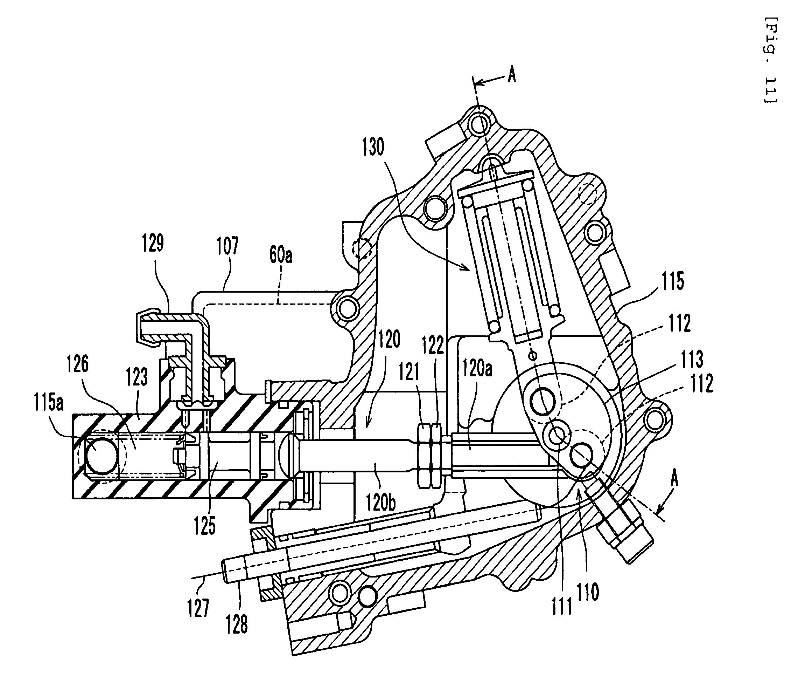

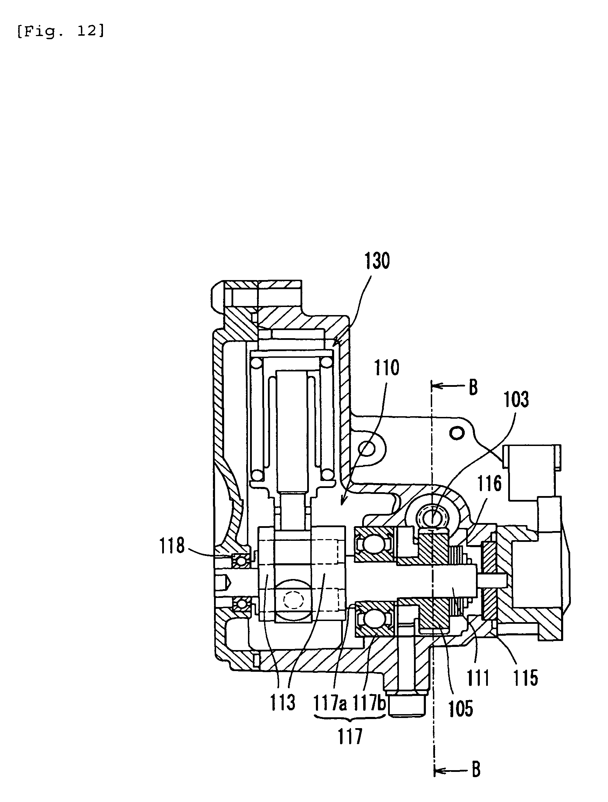

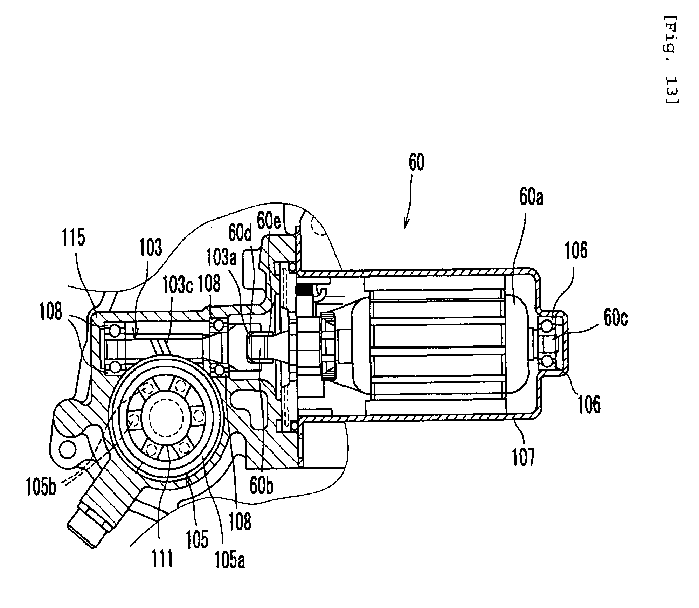

Fig. 11 is a cross sectional view of the clutch actuator 60. Fig. 12 is a cross sectional view along line A-A of Fig. 11, and Fig. 13 is a cross sectional view along line B-B of Fig. 12. Referring to Fig. 13, the clutch motor 60a is provided with a motor shaft 60b. The motor shaft 60b is disposed to pass through the center of the clutch motor 60a. A rear side end (the right side end in the figure) 60c of the motor shaft 60b is supported by a motor bearing 106. An outer ring of the motor bearing 106 is fixed to a motor case 107 that houses the clutch motor 60a. Note that, the motor bearing 106 is a ball bearing.

A front side end (the left side end in the figure) 60d of the motor shaft 60b is formed with a plurality of splines 60e. The front side end 60d is inserted and fitted within a spline hole 103a formed in the worm shaft 103, whereby the motor shaft 60b and the worm shaft 103 are spline fitted together.

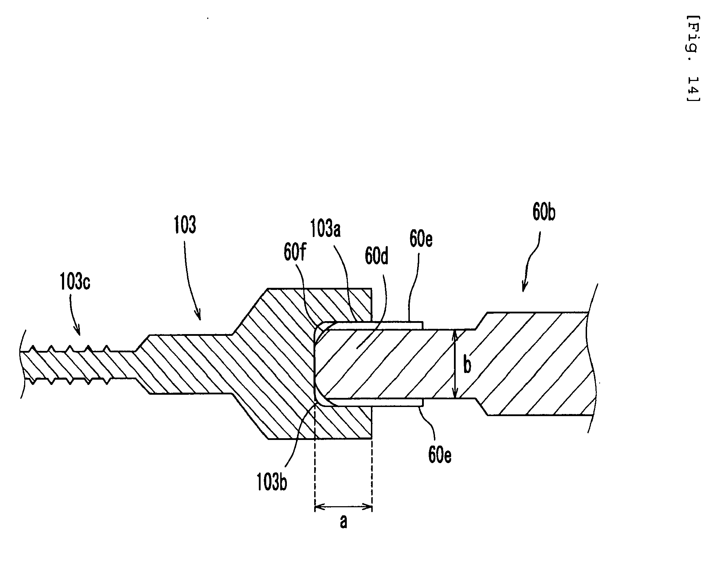

Fig. 14 is an enlarged cross sectional view of the fitting portion of the motor shaft 60b and the worm shaft 103. Referring to Fig. 14, the plurality of spline teeth 60e are formed in the front side end 60d of the motor shaft 60b. In addition, a spline groove that engages with the spline teeth 60e is formed in the spline hole 103a of the worm shaft 103. Further, the front side end 60d of the motor shaft 60b is inserted and fitted in the spline hole 103a of the worm shaft 103, whereby the members are spline fitted together.

In addition, the front side end 60d of the motor shaft 60b is chamfered to form a rounded section 60f. The round section 60f is formed to spread across an area further to the shaft center side of the motor shaft 60b than the bottom of the spline teeth 60e. As a result of chamfering the front side end 60d of the motor shaft 60b in this way, even if the shaft center of the motor shaft 60b oscillates during rotation of the clutch motor 60a, this can be absorbed at the worm shaft 103 side. Accordingly, transmission of oscillation to the worm shaft 103 can be inhibited. Further, the bottom of the spline hole 103a of the worm shaft 103 is also chamfered to form a rounded section 103b.

Moreover, a depth a of the spline hole 103a of the worm hole 103 is smaller than a diameter b of the front side end 60d of the motor shaft 60b. In other words, a < b. As a result of making the section of the motor shaft 60b fitted into the worm shaft 103 shorter in this way, oscillation of the shaft center of the motor shaft 60b during rotation thereof can be favorably absorbed at the worm shaft 103 side.

Referring to Fig. 13, a threaded section 103c (also refer to Fig. 14) is formed in the worm shaft 103. Further, the worm shaft 103 is supported by bearings 108 that are respectively disposed at the front side (the left side in the figure) and the rear side (the right side in the figure) of the threaded section 103c. The two bearings 108 are both ball bearings. The outer rings of the bearings 108 are fixed to a housing 115 of the clutch actuator 60. In this manner, the front and rear of the threaded section 103c is supported by the bearings 108, whereby shaft oscillation of the worm shaft 103 during rotation is inhibited, and rotation of the worm shaft 103 is stabilized.

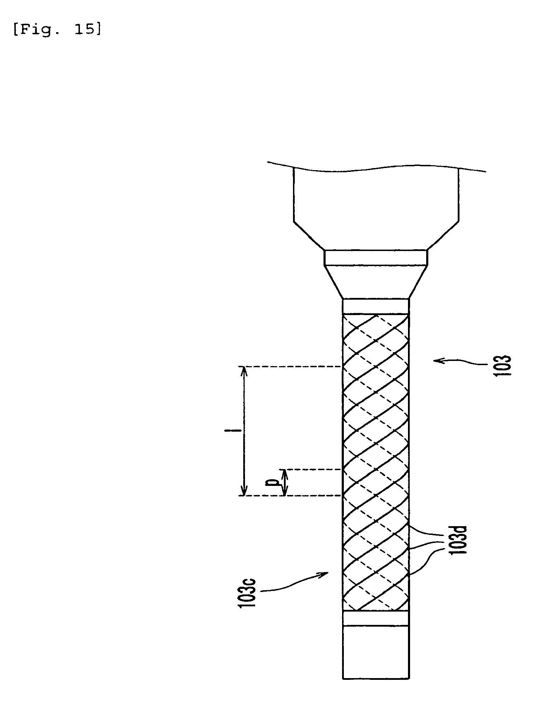

Fig. 15 is an enlarged view of the section of the worm shaft 103 in which the threaded section 103c is formed. Referring to Fig. 15, the threaded section 103c of the worm shaft 103 is formed with a plurality of threads 103d. Note that, Fig. 15 is intended to explain the number of threads of the threaded section 103c, but does not provide an accurate illustration of the shape of the threads 103d formed in the periphery surface of the thread section 103c.

Here, the distance moved in the axial direction when the worm shaft 103 rotates once will be taken to be lead I, the distance between adjacent threads 103d will be taken to be pitch p, and the number of threads in the threaded section 103c will be taken to be n. Given this, the relationship I = n × p is established. As is apparent from Fig. 15, in this embodiment, the number of threads n of the threaded section 103c is 4. By setting the number of threads of the threaded section 103c formed in the worm shaft 103 to be 2 or more (multiple) in this way, it is possible to make the lead angle of the worm wheel 105 larger. Accordingly, the reduction gear ratio of the worm gear (the reduction gear ratio between the worm shaft 103 and the worm wheel 105) can be set smaller, thereby allowing the responsiveness of he output rod 120 to be improved. As a result, responsiveness of the disengagement-engagement operation of the clutch mechanism 44 can be improved. Further, the transmission efficiency of multiple threads is better than that of a single thread, and thus the rotational motion of the clutch motor 60a can be efficiently converted to reciprocating motion of the output rod 120 (refer to Fig. 10 and Fig. 11). As a result, output loss of the clutch motor 60a can be reduced, thus allowing the responsiveness of the disengagement-engagement operation of the clutch mechanism 44 to be improved.

Referring to Fig. 13, the threaded section 103c of the worm shaft 103 meshes with gear teeth 105a of the worm wheel 105. The worm wheel 105 has a substantially ring-like shape, with the gear teeth 105a formed in the periphery surface thereof. Torque limiters 105b are provided in a shaft center section of the worm wheel 105. The torque limiters 105b are provided with: a transmission plate (not shown), which is spline fitted to the crank shaft member 111 of the crank shaft 110 (refer to Fig. 12) and which rotates along with the crank shaft 111; and an inner clutch (not shown) provided at the external edge of the transmission plate. When the driving force applied to the worm wheel 105 becomes equal to or greater than a predetermined value, the transmission plate and the inner clutch slip with respect to each other, thereby preventing excessive driving force from being transmitted to the crank shaft member 111. Note that, it is not essential to provide the torque limiters 105b in the invention, and the worm wheel 105 may be integrally fixed to the crank shaft 110.

Referring to Fig. 12, the worm wheel 105 is fixed to an end of the crank shaft member 111 of the crank shaft 110 (the right side end in Fig. 12). The worm wheel 105 is fixed to the crank shaft member 111 such that the worm wheel 105 is coaxial with the crank shaft member 111 and is parallel with crank arms 113 of the crank shaft 110. A side surface of the worm wheel 105 is perpendicular with respect to the crank shaft member 111.

The crank shaft member 111 of the crank shaft 110 is rotatably fixed at both ends of the housing 115. In addition, a Belleville spring 116 is interposed between the worm wheel 105 and the housing 115 on the crank shaft member 111.

The crank shaft member 111 is supported by a pair of bearings 117, 118. The outer rings of these two bearing 117, 118 are both fixed to the housing 115. The pair of bearings 117, 118 are both ball bearings. Among the two bearings, the bearing 117 is disposed between the worm wheel 105 and the right-side crank arm 113. The bearing 117 is a double sealed bearing that has seals on both the side of an inner ring 117a and an outer ring 117b. Bearing grease is enclosed in the inside of the bearing 117. Grease (molybdenum grease) is used between the above described worm shaft 103 and the worm wheel 105. However, this grease can potentially have a detrimental impact on the bearing 117 that is adjacent to the worm wheel 105. More specifically, if the above grease were to adhere to the inside of the bearing 117, it is possible that performance of the bearing 117 would be impaired. Thus, in the embodiment, a double sealed bearing is adopted for the bearing 117, and bearing grease is enclosed in the inside. As a result, the grease used between the worm shaft 103 and the worm wheel 105 can be prevented from entering inside the bearing 117 and having a detrimental impact.

Further, the bearing 118 is disposed to the left side of the left-side crank arm 113. Accordingly, the pair of crank arms 113 are interposed between the bearing 117 and the bearing 118. As a result of disposing the two bearings 117, 118 with the two crank arms 113 interposed therebetween in this manner, it is possible to stabilize rotation of the crank shaft member 111.

Moreover, the bearing 117 disposed close to the worm wheel 105 is a larger ball bearing than the bearing 118 that is disposed at a position away from the worm wheel 105. The bearing 117 disposed close to the worm wheel 105 is subjected to a comparatively large force acting in the radial direction. However, because a large ball bearing is used in this manner for the bearing 117, the crank shaft member 111 can be supported more stably.

Referring to Fig. 11, the output rod 120 is fixed to the crank pin 112 at the lower side of the crank shaft 110. The output rod 120 includes a base 120a formed with a tapped hole, and a rod 120b formed with a threaded section. The threaded section of the rod 120b is screwed into the tapped hole of the base 120a. In addition, a lock nut 121 and a nut 122 are screwed onto the threaded section of the rod 120b.

Adoption of this configuration in this embodiment allows adjustment of the length of the output rod 120. More specifically, the rod 120b can be rotated with respect to the base 120a in order to change the length of the output rod 120. After the length has been changed, the lock nut 121 and the nut 122 are tightened on the base 120a side, thereby fixing the output rod 120.

A tip of the rod 120b of the output rod 120 is provided with a piston 125. The piston 125 can slide in the axial direction of the output rod 120 within a cylinder 123 (the left-right direction in the figure). A left side section of the piston 125 in the cylinder 123 forms an oil chamber 126 that is filled with hydraulic oil. The oil chamber 126 is connected with a reservoir (not shown) via a tank connecting member 129.

In addition, one end of an assist spring 130 is fixed to the crank pin 112 at the upper side of the crank shaft 110. The other end of the assist spring 130 is fixed to the housing 115. The assist spring 130 assists rotation of the crank shaft member 111 of the crank shaft 110, thereby assisting the stroke of the output rod 120.

When the clutch mechanism 44 (refer to Fig. 7) is switched from a connected to a disconnected state, the clutch motor 60a is driven, thereby causing the coupled worm shaft 103 to rotate. Rotation of the worm shaft 103 is transmitted to the worm wheel 105 that is meshed with the worm shaft 103, and the worm wheel 105 rotates. When the worm wheel 105 rotates, the crank shaft member 111 of the crank shaft 110 that fixes the worm wheel 105 also rotates. Then, the rotational motion of the worm wheel 105 is converted to linear motion of the output rod 120 by the crank shaft 110, and the output rod 120 moves in the leftward direction of Fig. 11.

The output rod 120 that moves linearly in the leftward direction of Fig. 11 pushes the piston 125, thereby generating hydraulic pressure in the oil chamber 126. The generated hydraulic pressure is transmitted to the piston 463 (refer to Fig. 7) from a hydraulic fluid outlet 115a formed in the housing 115 via an oil hose (not shown). Then, the hydraulic pressure drives the push rods 461, 455 (refer to Fig. 7) to disengaged the clutch. Note that, the linear motion of the output rod 120 is assisted by the above mentioned assist spring 130.

With this embodiment, it is possible to automatically disengage the clutch mechanism 44 by driving the clutch motor 60a, and also manually disengage the clutch mechanism 44. Referring to Fig. 11, a guide tube 128 for a clutch wire 127 is provided at the lower side of the output rod 120 in the housing 115. One end of the clutch wire 127 is fixed to the lower side crank pin 112. As a result of the guide tube 128, the clutch wire 127 is positioned to run in a direction that extends leftwards and downwards in the figure. When a clutch lever, or the like, not shown, is manually operated, the clutch wire 127 is pulled in the longitudinal direction of the guide tube 128 (the leftward-downward direction in Fig. 11), thereby rotating the crank shaft 110 and moving the output rod 120 in the leftward direction of Fig. 11.

As shown in Fig. 11, the clutch motor 60a connected to the worm shaft 103 and the output rod 120 fixed to the crank pin 112 extend in substantially the same direction. However, in order to position the clutch motor 60a and the output rod 120 sure that there is no interference therebetween, the clutch motor 60a and the output rod 120 must be positioned apart from each other to a certain extent. In this case, in the embodiment, as shown in Fig. 12, the worm wheel 105 is fixed to the end of the crank shaft member 111 of the crank shaft 110 separately from the crank arms 113. Further, the worm wheel 105 is disposed to be parallel to the crank arms 113, and coaxial with the crank shaft member 111. As a result, even if the clutch motor 60a disposed close to the worm wheel 105 and the output rod 120 fixed to the crank pin 112 are positioned so that they do not interfere with each other, the length of the crank shaft member 111 can be made shorter. As a result, size and the weight increase of the crank shaft 110 can be restricted, and in addition size and the weight increase of the clutch actuator 60 itself can also restricted.

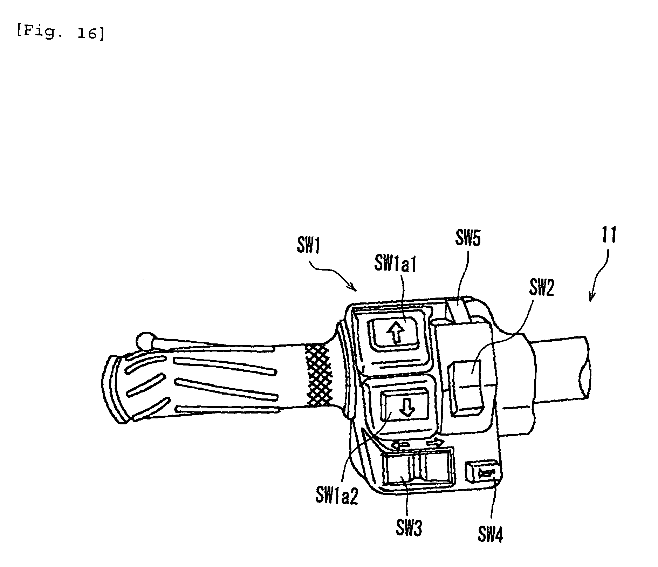

Next, the system of the automatic transmission control device will be explained in more detail. As shown in Fig. 16, a shift switch SW1, for example, is provided on a grip on the left side of the steering handlebar 11. The shift switch SW1 is configured from an upshift switch SW1a1 and a down-shift switch SW1a2. The rider operates the shift switch SW1 as necessary to upshift or downshift the shift position of the gears between a first gear speed and a fastest speed gear (for example, a sixth gear speed). Further, a selection switch SW2, an indicator switch SW3, a horn switch SW4 and a light switch SW5 are also provided on the left grip. Note that, the selection switch SW2 is used to select whether the gear shift operation is performed using a semi-automatic mode or a fully-automatic mode.

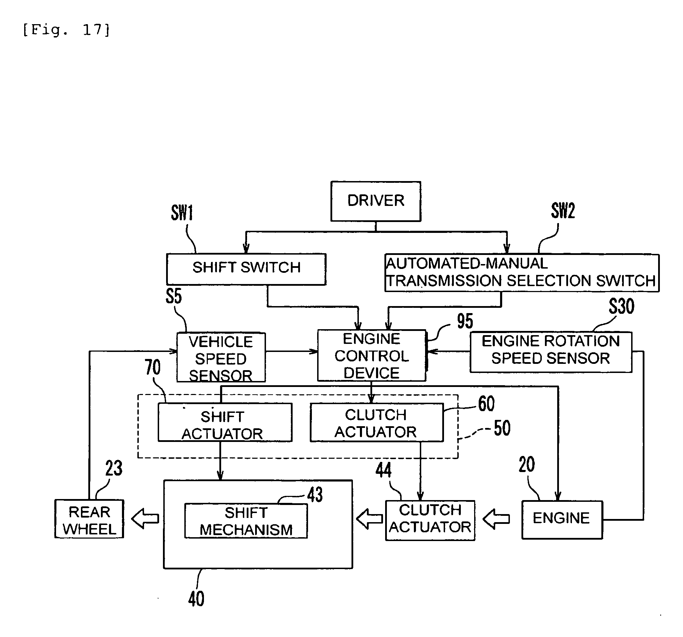

Referring to Fig. 17, switching of the shift mechanism 43 and the clutch mechanism 44 are both performed by the automatic transmission control device 50. Further, the motorcycle 1 is provided with, in addition to the shift position detection device S2 (refer to Fig. 6) of the shift actuator 70, the clutch position detection device S3 (refer to Fig. 10) of the clutch actuator 60, the engine rotation speed sensor S30, and a vehicle speed sensor S5, etc.

The engine control device 95 controls drive of the clutch actuator 60 and the shift actuator 70 based on the detection data of the various detection sensors and the instruction of the shift switch SW1. More specifically, predetermined programs that are pre-stored in the engine control device 95 and other operating circuits are used to automatically perform a series of shift operations including disengaging the clutch mechanism 44, switching the gears of the transmission 40, and engaging the clutch mechanism 44.

As described above, according to the clutch actuator 60 according to the above embodiments, the motor shaft 60b and the worm shaft 103 are engaged by being spline fitted together. Accordingly, as compared to the known art (for example, refer to patent document 1) in which both side surfaces of the I-cut section transmit driving force, driving force can be transmitted reliably. Further, the rotation direction space between the motor shaft 60b and the worm shaft 103 can be made smaller. As a result, the rotation of the worm shaft 103 rapidly follows the rotation of the clutch motor 60a, thereby allowing the responsiveness of the clutch disengagement-engagement operation to be improved.

Further, according to the clutch actuator 60 according to the embodiment, the rear side end 60c of the motor shaft 60b is supported by the motor bearing 106. In addition, the front and back of the threaded section 103c of the worm shaft 103 coupled with the motor shaft 60b are respectively supported by the bearings 108, 108. In this manner, according to the present clutch actuator 60, the motor shaft 60b and the worm shaft 103 are supported by three bearings in the axial direction, namely, the bearings 106, 108, 108. As described above, with the present clutch actuator 60, oscillation of the shaft center of the motor shaft 60b can be favorably absorbed at the worm shaft 103 side. Accordingly, the motor shaft 60b and the worm shaft 103 can be favorably supported by the 3 bearings 106, 108, 108. Further, oscillation of the shaft centers of the motor shaft 60b and the worm shaft 103 during rotation thereof can be inhibited, thereby stabilizing the rotation of the threaded section 103c and allowing rotation to be reliably transmitted to the worm wheel 105.

In particular, with this embodiment, the front and back of the threaded section 103c of the worm shaft 103 are supported by the bearings 108, 108. Thus, it is possible to favorably inhibit the occurrence of shaft oscillation during rotation of the threaded section 103c.

Moreover, with the clutch actuator 60 according to the embodiment, the motor shaft 60b is inserted and fitted in the worm shaft 103 such that both shafts are spline fitted together. In addition, the spline teeth 60e are formed on the motor shaft 60b and the spline hole 103a is formed in the worm shaft 103. Note that, amongst the shaft formed with the spline teeth and the shaft formed with the spline hole, the shaft formed with the spline teeth has a smaller external diameter. More specifically, in the case of the shaft formed with the spline teeth, the distance between the shaft center and the external circumference edge of the spline teeth is the external diameter. On the other hand, in the case of the shaft formed with the spline hole, the distance between the shaft center and the internal circumference surface of the spline hole (which is the same as the external circumference edge of the spline teeth) is the internal diameter. Thus, the shaft formed with the spline hole has an external diameter that is larger than the shaft formed with the spline teeth. Accordingly, according to the embodiment, since the spline teeth 60e are formed on the motor shaft 60b, it is possible to make the motor shaft 60b thinner. Therefore, size increase of the clutch motor 60a can be restricted. However, according to the above embodiments, the spline hole may be formed in the motor shaft 60b and the spline teeth may be formed on the worm shaft 103. In this case, the worm shaft 103 is inserted and fitted into the motor shaft 60b, thereby spline fitting both shafts together.

Moreover, as is apparent from Fig. 14, in the clutch actuator 60 according to the embodiment, the depth a of the spline hole 103a of the worm shaft 103 is smaller than the diameter b of front end side 60d of the motor shaft 60b. Accordingly, oscillation of the shaft center of the motor shaft 60b during rotation can be favorably absorbed at the worm shaft 103 side.

Further, in the clutch actuator 60 according to the embodiment, the front side end 60d of the motor shaft 60b is chamfered. Thus, when the clutch motor 60a is rotating, even if the shaft center of the motor shaft 60b oscillates, this oscillation can be absorbed at the worm shaft 103 side. As a result, transmission of oscillation to the worm shaft 103 can be inhibited.

Moreover, the rounded section 60f formed in the front side end 60d of the motor shaft 60b by chamfering is formed to spread across an area further to the shaft center side of the motor shaft 60b than the bottom of the spline teeth 60e. Accordingly, oscillation of the shaft center of the motor shaft 60b during rotation can be favorably absorbed at the worm shaft 103 side.

As described above, the embodiment is used for a clutch actuator.

The description above discloses (amongst others), an embodiment of a clutch actuator which includes: a motor having a motor shaft; a worm shaft formed with a threaded section and that rotates coaxially with the motor shaft; a worm wheel that meshes with the threaded section of the worm shaft; an output rod that moves reciprocally in the axial direction to disengage and engage a clutch; and a crank shaft that converts rotational motion of the worm wheel to reciprocating motion of the output rod, in which the motor shaft and the worm shaft are engaged by being splined and fitted together.

According to this clutch actuator, the motor shaft and the worm shaft are engaged by being spline fitted together. Accordingly, as compared to the structure disclosed in patent document 1 above in which both side surfaces of the I-cut section transmit driving force, the present clutch actuator permits shaft misalignment of the motor shaft and the worm shaft, and improves responsiveness of the clutch disengagement-engagement operation.

According to this embodiment, the clutch actuator that disengages-engages the clutch makes it possible to improve the responsiveness of the clutch disengagement-engagement operation.

The description above further discloses, according to a first preferred aspect, a clutch actuator comprising: a motor having a motor shaft; a worm shaft formed with a threaded section and that rotates coaxially with the motor shaft; a worm wheel that meshes with the threaded section of the worm shaft; an output rod that moves reciprocally in the axial direction to disengage and engage a clutch; and a crank shaft that converts rotational motion of the worm wheel to reciprocating motion of the output rod, wherein the motor shaft and the worm shaft are engaged by being splined and fitted together.

Further, according to a second preferred aspect, the motor shaft and the worm shaft may be supported by three bearings provided in a row in the axial direction.

Further, according to a third preferred aspect, each of the bearings may be a ball bearing.

Further, according to a fourth preferred aspect, amongst the three bearings, two of the bearings may be positioned at one end side and the other end side of the threaded section of the worm shaft.

Further, according to a fifth preferred aspect, spline teeth may be formed in the motor shaft, and a spline hole that meshes with the spline teeth may be formed in the worm shaft.

Further, according to a sixth preferred aspect, a depth of the spline hole may be smaller than a diameter of a section of the motor shaft in which the spline teeth are formed.

Further, according to a seventh preferred aspect, a tip of the motor shaft is chamfered.

Further, according to an eighth preferred aspect, the chamfering may be performed on an area of the motor shaft that spreads further to a shaft center side than the bottom of the spline teeth formed in the motor shaft.

Further, according to a ninth preferred aspect, the clutch actuator may be adapted for use in a saddle-type vehicle.

Further, according to a tenth preferred aspect, there is provided an engine unit comprising: an engine; a clutch that disengages and engages transmission of driving force of the engine; and the clutch actuator according to one of the first to ninth embodiments.

Further, according to an eleventh preferred aspect, there is provided a saddle-type vehicle comprising the engine unit according to the tenth preferred aspect.

Further, according to a particularly preferred embodiment, in order to provide a clutch actuator that can improve responsiveness of a clutch operation, an embodiment of the clutch actuator is provided which includes: a motor having a motor shaft 60b; a worm shaft 103 formed with a threaded section 103c at a tip end thereof; a worm wheel that meshes with the threaded section 103c of the worm shaft 103; an output rod that moves reciprocally in the axial direction to disengage and engage a clutch; and a crank shaft that converts rotational motion of the worm wheel to reciprocating motion of the output rod. The motor shaft 60b and the worm shaft 103 are engaged by being splined and fitted together.

## Claims

1. Clutch actuator (60) for a clutch of a motorbike, said clutch actuator comprising:
a motor (60a) having a motor shaft (60b);
a worm shaft (103) formed with a threaded section and configured to rotate coaxially with the motor shaft (60b);
a worm wheel (105) that meshes with the threaded section of the worm shaft (103);
an output rod (120) that moves reciprocally in the axial direction to disengage and engage the clutch; and
a crank shaft (110) that converts rotational motion of the worm wheel (105) to reciprocating motion of the output rod (120), **characterized in that**
the motor shaft (60b) and the worm shaft (103) are engaged by being spline fitted together,
spline teeth (60e) are formed in the motor shaft (60b), and a spline hole (103a) that meshes with the spline teeth (60e) is formed in the worm shaft (103), and
a depth (a) of the spline hole (103a) is smaller than a diameter (b) of a section (60d) of the motor shaft (103) in which the spline teeth (60e) are formed.

2. Clutch actuator according to claim 1, **characterized in that** the motor shaft (60b) and the worm shaft (103) are supported by three bearings (106,108,108) provided in a row in their axial direction.

3. Clutch actuator according to claim 2, **characterized in that** each of the bearings (106,108,108) is a ball bearing.

4. Clutch actuator according to claim 2 or 3, **characterized in that,** amongst the three bearings, two of the bearings (106,108) are positioned at one end side and the other of the bearings is positioned on the other end side of the threaded section (103c) of the worm shaft (103).

5. Clutch actuator according to one of the claim 1 to 4, **characterized in that** a tip of the motor shaft (60b) is chamfered.

6. Clutch actuator according to claim 5, **characterized in that** the chamfering is performed on an area of the motor shaft (60b) that spreads further to a shaft center side than the bottom of the spline teeth (60e) formed in the motor shaft (60b).

7. Engine unit comprising:
an engine;
a clutch that disengages and engages transmission of driving force of the engine; and
the clutch actuator according to one of the claims 1 to 6.

8. Motorbike comprising the engine unit according to claim 7.

## Patentansprüche

1. Kupplungsbetätiger (60) für eine Kupplung eines Motorrades, wobei der Kupplungsbetätiger aufweist:
einen Motor (60a) mit einer Motorwelle (60b);
eine Schneckenwelle (103), gebildet mit einem Gewindeabschnitt und konfiguriert, um koaxial mit der Motorwelle (60b) zu drehen;
ein Schneckenrad (105), das mit dem Gewindeabschnitt der Schneckenwelle (103) im Kämmeingriff ist;
einen Ausgangsstab (120), der sich hin- und hergehend in der axialen Richtung bewegt, um die Kupplung außer Eingriff oder in Eingriff zu bringen; und
eine Kurbelwelle (110), die die Drehbewegung des Schneckenrades (105) in eine hin- und hergehende Bewegung der Ausgangsstabes (120) wandelt, **dadurch gekennzeichnet, dass**
die Motorwelle (60b) und die Schneckenwelle (103) im Eingriff sind, indem sie miteinander fedemutverbunden sind,
Nutzähne (60e) in der Motorwelle (60b) gebildet sind und eine Nutbohrung (103a), die mit den Nutzähnen (60e) im Eingriff ist, in der Schneckenwelle (103) gebildet ist, und
eine Tiefe (a) der Nutbohrung (103a) kleiner ist als ein Durchmesser (b) eines Abschnittes (60d) der Motorwelle (103), in dem die Nutzähne (60e) gebildet sind.

2. Kupplungsbetätiger nach Anspruch 1, **dadurch gekennzeichnet, dass** die Motorwelle (60b) und die Schneckenwelle (103) durch drei Lager (106, 108, 108), vorgesehen in einer Reihe in ihrer axialen Richtung, gelagert werden.

3. Kupplungsbetätiger nach Anspruch 2, **dadurch gekennzeichnet, dass** jedes der Lager (106, 108, 108) ein Kugellager ist.

4. Kupplungsbetätiger nach Anspruch 2 oder 3, **dadurch gekennzeichnet, dass** unter den drei Lagern zwei der Lager (106, 108) auf einer Endseite positioniert sind und das andere der Lager auf der anderen Endseite des Gewindeabschnitts (103c) der Schneckenwelle (103) positioniert ist.

5. Kupplungsbetätiger nach einem der Ansprüche 1 bis 4, **dadurch gekennzeichnet, dass** eine Spitze der Motorwelle (60b) abgeschrägt ist.

6. Kupplungsbetätiger nach Anspruch 5, **dadurch gekennzeichnet, dass** die Abschrägung an einem Bereich der Motorwelle (60b) ausgeführt ist, der sich weiter ausbreitet zu einer Wellenmittenseite als der Boden der Nutzähne (60e), gebildet in der Motorwelle (60b).

7. Motoreinheit, aufweisend:
eine Brennkraftmaschine;
eine Kupplung, die eine Übertragung der Antriebskraft der Brennkraftmaschine in Eingriff oder außer Eingriff bringt; und
den Kupplungsbetätiger nach einem der Ansprüche 1 bis 6.

8. Motorrad, aufweisend die Motoreinheit nach Anspruch 7.

## Revendications

1. Actionneur d'embrayage (60) pour un embrayage d'un motocycle, ledit actionneur d'embrayage comprenant :
un moteur (60a) possédant un arbre de moteur (60b) ;
un arbre à vis sans fin (103) formé avec une section filetée et configuré pour tourner de façon coaxiale avec l'arbre de moteur (60b) ;
une roue à vis sans fin (105) qui s'engrène avec la section filetée de l'arbre à vis sans fin (103) ;
une tige de sortie (120) qui se déplace en va-et-vient dans la direction axiale pour désengager et engager l'embrayage ; et
un vilebrequin (110) qui convertit le mouvement rotatif de la roue à vis sans fin (105) en mouvement en va-et-vient de la tige de sortie (120), **caractérisé en ce que**
l'arbre de moteur (60b) et l'arbre à vis sans fin (103) sont engagés en étant fixés l'un à l'autre par cannelure,
des dents de cannelure (60e) sont formées dans l'arbre de moteur (60b), et un orifice de cannelure (103a) qui s'engrène avec les dents de cannelure (60e) est formé dans l'arbre à vis sans fin (103), et
une profondeur (a) de l'orifice de cannelure (103a) est inférieure à un diamètre (b) d'une section (60d) de l'arbre de moteur (103) dans laquelle sont formées les dents de cannelure (60e).

2. Actionneur d'embrayage selon la revendication 1, **caractérisé en ce que** l'arbre de moteur (60b) et l'arbre à vis sans fin (103) sont supportés par trois paliers (106, 108, 108) prévus dans une rangée dans leur direction axiale.

3. Actionneur d'embrayage selon la revendication 2, **caractérisé en ce que** chacun des paliers (106, 108, 108) est un palier à billes.

4. Actionneur d'embrayage selon la revendication 2 ou 3, **caractérisé en ce que,** parmi les trois paliers, deux des paliers (106, 108) sont positionnés sur un côté d'extrémité et l'autre des paliers est positionné sur l'autre côté d'extrémité de la section filetée (103c) de l'arbre à vis sans fin (103).

5. Actionneur d'embrayage selon une des revendications 1 à 4, **caractérisé en ce qu'**une pointe de l'arbre de moteur (60b) est chanfreinée.

6. Actionneur d'embrayage selon la revendication 5, **caractérisé en ce que** le chanfreinage est réalisé sur une zone de l'arbre de moteur (60b) qui s'étend davantage jusqu'à un côté de centre d'arbre que la partie inférieure des dents de cannelure (60e) formées dans l'arbre de moteur (60b).

7. Unité de moteur comprenant :
un moteur ;
un embrayage qui désengage et engage une transmission de force d'entraînement du moteur ; et
l'actionneur d'embrayage selon une des revendications 1 à 6.

8. Motocycle comprenant l'unité de moteur selon la revendication 7.
